# FASCICULE DE BREVET EUROPEEN

(11) **EP 3 862 946 B1**
(45) Date de publication et mention de la délivrance du brevet: **16.08.2023**
(21) Numéro de dépôt: 20305103.2
(22) Date de dépôt: 05.02.2020
(51) Int. Cl.: G06Q 10/08, G06Q 10/20, G06Q 10/087

(54) **PROCÉDÉ ET SYSTÈME POUR LA PROTECTION CONTRE DES FODS D'UNE ZONE DE MONTAGE OU DE MAINTENANCE AÉRONAUTIQUE**
VERFAHREN UND SYSTEM ZUM SCHUTZ GEGEN FREMDKÖRPERSCHADEN (FOD) EINES MONTAGE- ODER WARTUNGBEREICHS DER LUFTFAHRT
METHOD AND SYSTEM FOR PROTECTING AN AREA FOR AERONAUTICAL ASSEMBLY OR MAINTENANCE AGAINST FOD

(43) Date de publication de la demande: 11.08.2021
(73) Titulaire: Trigo Qualitaire, 92000 Nanterre (FR)
(72) Inventeur: GOMEZ-ESCALONILLA BALLESTEROS, Pedro Pablo, 28034 Madrid (ES); MARQUIS, Emmanuel, 31000 Toulouse (FR); SÁNCHEZ ALCÁNTARA, Daniel, 41704 Dos Hermanas (ES)
(74) Mandataire: Regimbeau

(56) Documents cités:
- WO-A1-2012/025676
- WO-A1-2012/080412
- US-A1- 2005 110 638
- US-A1- 2008 059 338
- US-A1- 2008 088 447

## Description

### Domaine technique général et art antérieur

La présente invention est relative à la fabrication ou à la maintenance aéronautique.

Une thématique importante dans le domaine de l'aéronautique est la protection contre les corps étrangers ou débris, désignés par « FOD » pour « Foreign Object Débris » ou « Foreign Object Damage » selon la terminologie anglosaxonne généralement utilisée.

La présence de corps étrangers ou de débris à l'intérieur d'un avion ou dans l'environnement de celui-ci peut générer des incidents de diverses importances.

Par exemple, un simple tournevis oublié à l'intérieur de l'avion peut provoquer un bruit gênant en vol, mais également être à l'origine d'un court-circuit ou d'un incendie. Il peut en outre être potentiellement à l'origine d'événements plus catastrophiques.

Les incidents liés à des FOD sont d'ailleurs suivis dès le premier jour de vol dans les rapports d'entretien des aéronefs.

L'industrie aéronautique travaille depuis de nombreuses années sur des technologies de détection de FOD dans des zones critiques telles que des pistes de décollage, des voies de circulation (taxiways), des portes d'aérogare, etc.. Ces technologies sont une option souvent plus efficace en termes de coût, de temps et de résultat que l'inspection visuelle humaine effectuée jusqu'à présent.

A ce jour toutefois, ces technologies sont principalement dédiées à l'environnement de déplacement au sol ou à l'environnement de décollage/atterrissage des aéronefs.

L'invention s'intéresse quant à elle plus particulièrement à l'environnement de maintenance ou de montage des aéronefs et à la protection contre l'oubli de corps étrangers laissés dans/sur un aéronef ou dans une zone autour de celui-ci à l'occasion d'une intervention de maintenance ou sur une chaine de montage.

Les programmes de prévention prévoient généralement la sensibilisation des intervenants et la diffusion auprès d'eux de bonnes pratiques méthodologiques de type « Clean as you go » ou encore d'inspection visuelle systématique des zones d'intervention.

Il est également connu d'effectuer des inventaires d'outils à la fin d'une intervention ou d'une journée de travail.

De tels inventaires peuvent se faire manuellement, par reports sur des feuilles de contrôle, avec alors des risques d'erreur humaine dans les déclarations d'entrée/sortie des outils.

Plus récemment, certains fabricants d'outillage ont proposé des boîtes à outils « intelligentes » capables de détecter par elle-même la présence ou l'absence d'un outil donné dans un tiroir de rangement.

De nombreuses solutions en ce sens ont déjà été proposées. On pourra par exemple se référer aux brevets ou demandes de brevets suivants : US 2008/0088447 A1, WO2018/148644, US7755482 ou US6840451.

Ces systèmes de contrôle d'inventaire sont toutefois particulièrement contraignants pour les utilisateurs, dans la mesure où ils nécessitent de passer du temps pour déclarer et inventorier dans le système tout nouvel objet que l'on souhaite utiliser.

En outre, ils ne répondent pas nécessairement précisément à la problématique de la protection contre les FOD.

Le fait qu'un outil ne soit pas rangé à sa place dans son tiroir de rangement ne signifie pas automatiquement que l'outil se trouve dans une situation FOD, mais signifie uniquement le fait que l'outil n'est pas revenu à son emplacement d'origine. Typiquement, l'outil peut être resté dans une proche de l'intervenant ou avoir été déposé à un autre endroit par celui-ci. L'absence de l'outil dans son tiroir de rangement est uniquement un premier indice, sur la base duquel il n'est pas possible de déclencher une alarme, sauf à accepter un taux de fausses détections important.

De plus, beaucoup d'articles FOD risquent de ne pas être considérés comme des outils et risquent de ne pas être inventoriés.

Par exemple, un stylo ou un téléphone portable sont des FOD potentiels qui ne trouveraient pas leur place dans une boite à outils.

Pourtant, ce type d'article constitue un gros contributeur en termes d'incidents FOD.

### Présentation générale de l'invention

L'invention propose quant à elle une solution de protection contre les FOD sur des zones de montage ou de maintenance aéronautique, permettant de pallier les inconvénients des solutions existantes et d'apporter plus d'efficacité dans la sécurisation vis-à-vis des FODs.

Un but de l'invention est en particulier de proposer une solution simple, facile à implémenter et sans beaucoup de contrainte pour les utilisateurs, que ce soit en termes de formation ou de sensibilisation ou en termes de temps passé.

La solution proposée a en outre l'avantage de ne pas être sujette à l'erreur humaine.

Ainsi, l'invention propose un procédé de protection contre les dommages causés par corps étrangers, FODs, d'une zone de montage ou de maintenance aéronautique, tel que l'on délimite une zone de protection (ZP) autour d'un aéronef ou d'une partie de celui-ci sur laquelle on intervient et on met à disposition des intervenants, à l'extérieur de ladite zone, des étiquettes d'identification (E) adaptées pour être associées physiquement à des objets (0) susceptibles d'être manipulés par les intervenants à l'intérieur de la zone (ZP), lesdites étiquettes étant en outre adaptées pour être lues par des moyens de détection et de lecture (DL) lors de l'entrée de ces objets dans la zone (ZP) et lors de leur sortie et tel que les identifiants lus sur ces étiquettes (E) lors des entrées et sorties des objets sont traités automatiquement pour détecter un éventuel oubli d'objet (0) dans la zone de protection et générer le cas échéant une alarme lorsqu'un objet entré n'est pas ressorti.

Les intervenants autorisés dans la zone de protection peuvent être équipés de badges d'identification adaptés pour être lus par les moyens de détection et de lecture.

Comme on l'aura compris, une telle solution permet de ne pas avoir à faire l'inventaire précis des outils et objets, mais définit une zone de protection donnée (typiquement, dans une définition simple, l'avion est la zone de protection et le reste du monde est à l'extérieur)

Les entrées et sorties entre le monde extérieur et la zone de protection se font en des passages équipés de moyens de détection et de lecture des étiquettes.

Tout ce qui entre doit avoir une étiquette d'identification : le cas échéant l'intervenant lui-même, mais surtout sa casquette, son stylo, son téléphone portable, son outillage, son consommable, etc....

A chaque entrée et chaque sortie, les identifiants des objets sont lus automatiquement au fur et à mesure de la détection des étiquettes.

Ceci permet de détecter que des objets ne sont pas ressortis et de déclencher si besoin des alarmes.

Lorsqu'un intervenant sort de la zone de protection sans un objet qu'il y avait apporté, une alarme est activée pour avertir cet intervenant (et le gestionnaire de programme FOD si nécessaire) de le récupérer. L'intervenant est ainsi averti au moment où il sort et où l'objet a été oublié (au lieu d'être remarqué à la fin de la journée de travail, ce qui rend plus difficile de retrouver l'objet en raison de la mobilité de l'intervenant pendant toute la journée).

Ainsi, les intervenants n'ont plus à passer de temps à inventorier les outils ou objets qu'ils apportent avec eux.

En outre la solution ne repose pas sur un contrôle visuel des outils ou sur le remplissage de la fiche d'inventaire en fin de travail journée : l'erreur humaine est éliminée.

L'invention propose en outre un système de protection pour la mise en oeuvre de ce procédé.

Ce système selon la revendication 1 comporte :
- une délimitation adaptée pour définir une zone de protection autour d'un aéronef ou d'une partie de celui-ci sur laquelle on intervient,
- une pluralité d'étiquettes d'identification adaptées pour être associées physiquement à des objets susceptibles d'être manipulés par les intervenants à l'intérieur de la zone de protection,
- des moyens de détection et de lecture aptes à lire les étiquettes d'identification lors de l'entrée de ces objets dans la zone de protection et lors de leur sortie,
   et
- des moyens adaptés au traitement automatique des identifiants lus sur ces étiquettes lors des entrées et sorties des objets pour détecter un éventuel oubli d'objet dans la zone de protection et générer le cas échéant une alarme lorsqu'un objet entré n'est pas ressorti.

Le système comporte également avantageusement des badges d'identification des intervenants adaptés pour être lus par les moyens de détection et de lecture.

Les étiquettes d'identification, et le cas échéant les badges, peuvent être de type RFID.

Les étiquettes d'identification sont par exemple autocollantes.

Les moyens de détection et de lecture d'identifiant peuvent comporter un lecteur d'étiquettes RFID et/ou un moyen de détection optique.

Ils sont par exemple portés par un support, tel qu'un portique ou un mat, situé au niveau d'un passage d'entrée /sortie de la zone de protection.

### Brève description des dessins

D'autres caractéristiques et avantages de l'invention ressortiront encore de la description qui suit, laquelle est purement illustrative et non limitative, et doit être lue en regard des figures annexées sur lesquelles :

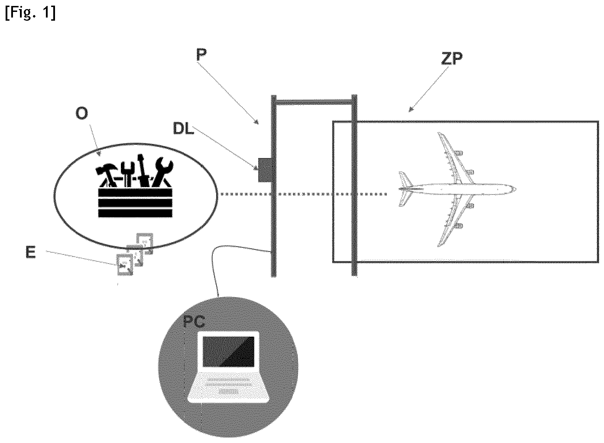

- la figure 1 illustre schématiquement un système de protection conforme à un mode de réalisation possible de l'invention.

### Description d'un ou plusieurs modes de mise en oeuvre et de réalisation

La figure 1 illustre une zone de protection ZP définie sur une chaîne de montage d'un aéronef ou encore dans le cadre d'une intervention de maintenance.

Cette zone de protection ZP comprend typiquement l'aéronef lui-même et une partie de son environnement (échelles, ascenseurs, portes).

Elle peut être également limitée à une partie de l'aéronef (zone autour d'un réacteur sur lequel un mécanicien intervient par exemple

Elle est par exemple définie par des marquages au sol, ou encore par des délimitations physiques : cloisons, barrières, rubans de délimitation, etc...

L'accès à la zone de protection ZP n'est possible que par des passages P identifiés et ménagés dans ces délimitations.

Chacun de ces passages P est équipé d'un ou plusieurs moyens DL de détection et de lecture d'identifiant, tel qu'un lecteur d'étiquettes RFID ou encore un moyen de détection optique (caméra associée à un traitement d'images permettant la reconnaissance d'identifiants, lecteur de code barre, etc.).

Un tel moyen DL est monté sur un support tel qu'un portique ou un mat.

La délimitation de la zone de protection ZP, les moyens de détection et de lecture DL, ainsi que les portiques ou mats sur lesquels ils sont montés sont réalisés de façon à être facilement déplaçables de façon à permettre aux opérateurs d'adapter/moduler comme ils le souhaitent la zone de protection.

A l'extérieur de la zone de protection ZP, les intervenants disposent d'étiquettes d'identification E (étiquettes RFID, étiquettes à identifiant optique, notamment à code barre, etc..) à associer physiquement à tout élément (objet O) devant être introduit dans la zone de protection.

Chaque étiquette d'identification E présente un identifiant (code, numéro, etc.) différent.

L'association physique entre un objet O et une étiquette E peut se faire par tout moyen permettant d'accrocher une étiquette sur un objet, par exemple par collage, les étiquettes présentant à cet effet une face autocollante

Les intervenants disposent en outre de badges (par exemple, des badges RFID) permettant d'identifier individuellement les intervenants autorisés à entrer dans la zone de protection.

Ces badges sont également lus par le ou les moyens de détection situés au niveau des passages d'entrée /sortie de la zone de protection.

On notera que les technologies RFID (classiquement connues en elles-mêmes), sont préférées pour les étiquettes RFID, les badges des intervenants et les détecteurs DL.

Un traitement logiciel mis en oeuvre sur des moyens de traitement informatiques classiques (par exemple, un PC portable associé à un câblage permettant une connexion facilement adaptable aux différents moyens de détection et de lecture d'identifiants) mémorise dans une base de données locale les identifiants des étiquettes et badges lus par les moyens de détection situés au niveau des passages d'entrée /sortie de la zone de protection.

Ce traitement associe les identifiants des objets O entrants ou sortants au niveau d'un passage P donné de la zone de protection ZP à l'identifiant de la personne détectée concomitamment au niveau du même passage.

Il met à jour en continu la liste des identifiants des objets O entrés et celle des identifiants des objets O sortis et déclenche des alarmes, par exemple lorsqu'il est détecté que les objets O entrés avec un intervenant donné ne sont pas tous ressortis avec lui.

Lors de la détection de la sortie d'un intervenant, on met en oeuvre une comparaison sur la liste des identifiants des étiquettes d'objets détectés comme des objets entrants concomitamment à la détection de l'entrée de l'intervenant dans la zone de protection.

Cette détection peut se faire en comparant la liste des identifiants d'objets détectés en même temps que l'identifiant de l'intervenant à l'occasion de son entrée dans la zone et la liste des identifiants d'objets considérés comme toujours dans la zone de protection après que l'intervenant ait quitté la zone.

Comme on le comprend aisément, un tel système est simple d'utilisation.

Il ne nécessite pas de déclaration préalable des outils, de sorte que si on les y autorise, des intervenants extérieurs peuvent entrer dans la zone de protection avec leurs propres outils. Il leur suffit d'être équipé d'un badge d'accès et de coller des étiquettes d'identifiant sur les outils qu'ils apportent. Les portiques d'entrée/sortie détecteront ces étiquettes et signaleront le cas échéant que quelque chose a été laissé dans l'avion.

Par ailleurs, les intervenants ne perdent pas de temps dans des formalités de reconnaissance ou d'inventaire : pas besoin de listes d'identifiants, ou d'entrer des codes d'accès ou encore d'une reconnaissance par empreinte digitale : il leur suffit d'entrer ou sortir de la zone après avoir étiquetés ceux des objets qu'ils apportent qui n'auraient pas été préalablement étiquetés.

L'étiquetage est en soi une opération simple, surtout avec une étiquette auto-adhésive : les intervenants peuvent facilement étiqueter leur téléphone portable, leur casquette, leurs gants, etc. sans avoir besoin d'utiliser un système de gestion complexe. Le numéro d'étiquette (identifiant) est lu automatiquement à l'entrée et à la sortie, sans perte de temps en inscription et en contrôle.

## Revendications

1. Procédé de protection contre les dommages causés par corps étrangers, FODs, d'une zone de montage ou de maintenance aéronautique, tel que l'on délimite une zone de protection (ZP) autour d'un aéronef ou d'une partie de celui-ci sur laquelle on intervient et on met à disposition des intervenants, à l'extérieur de ladite zone, des étiquettes d'identification (E) adaptées pour être associées physiquement à des objets (O) susceptibles d'être manipulés par les intervenants à l'intérieur de la zone (ZP),
lesdites étiquettes étant en outre adaptées pour être lues par des moyens de détection et de lecture (DL) lors de l'entrée de ces objets dans la zone (ZP) et lors de leur sortie et tel que les identifiants lus sur ces étiquettes (E) lors des entrées et sorties des objets sont traités automatiquement pour détecter un éventuel oubli d'objet (O) dans la zone de protection et générer le cas échéant une alarme lorsqu'un objet entré n'est pas ressorti.

2. Procédé selon la revendication 1, dans lequel les intervenants autorisés dans la zone de protection (ZP) sont équipés de badges d'identification adaptés pour être lus par les moyens de détection et de lecture.

3. Procédé selon la revendication 2, dans lequel, lors de la détection de la sortie d'un intervenant, on met en oeuvre une comparaison sur la liste des identifiants des étiquettes d'objets détectés comme des objets entrants concomitamment à la détection de l'intervenant lorsqu'il est entré dans la zone de protection (ZP).

4. Système de protection contre les dommages causés par corps étrangers, FODs, d' une zone de montage ou de maintenance aéronautique, tel qu'il comporte :
- une délimitation adaptée pour définir une zone de protection (ZP) autour d'un aéronef ou d'une partie de celui-ci sur laquelle on intervient,
- une pluralité d'étiquettes d'identification (E) adaptées pour être associées physiquement à des objets susceptibles d'être manipulés par les intervenants à l'intérieur de la zone de protection,
- des moyens de détection et de lecture (DL) aptes à lire les étiquettes d'identification (E) lors de l'entrée de ces objets dans la zone de protection et lors de leur sortie,
et
des moyens adaptés au traitement automatique des identifiants lus sur ces étiquettes lors des entrées et sorties des objets pour détecter un éventuel oubli d'objet dans la zone de protection et générer le cas échéant une alarme lorsqu'un objet entré n'est pas ressorti.

5. Système selon la revendication 4, comportant des badges d'identification des intervenants adaptés pour être lus par les moyens de détection et de lecture.

6. Système selon la revendication 5, dans lequel, les moyens de traitement sont adaptés pour mettre en oeuvre, lors de la détection de la sortie d'un intervenant , une comparaison sur la liste des identifiants des étiquettes d'objets détectés comme des objets entrants concomitamment à la détection de l'entrée de l'intervenant dans la zone de protection (ZP).

7. Système selon l'une des revendications 4 ou 5, dans lequel les étiquettes d'identification (E), et le cas échéant les badges, sont de type à identification par radiofréquences, RFID.

8. Système selon la revendication 7, dans lequel les étiquettes d'identification (E) sont autocollantes.

9. Système selon la revendication 4, dans lequel les moyens de détection et de lecture d'identifiant comporte un lecteur d'étiquettes de type à identification par radiofréquences, RFID, et/ou un moyen de détection optique.

10. Système selon la revendication 9, dans lequel les moyens de détection et de lecture d'identifiants sont portés par un support du système, tel qu'un portique ou un mat, adapté pour être situé au niveau d'un passage d'entrée /sortie de la zone de protection.

## Patentansprüche

1. Verfahren zum Schutz vor Schäden, die durch Fremdkörper, FODs, in einem Montage- oder Wartungsbereich der Luftfahrt verursacht werden, indem eine Schutzzone (ZP) um ein Luftfahrzeug oder einen Teil davon, an dem gearbeitet wird, abgegrenzt wird, und den Arbeitskräften, außerhalb dieser Zone, Identifikationsetiketten (E) zur Verfügung gestellt werden, die geeignet sind, physisch mit Objekten (O) assoziiert zu werden, die von den Arbeitskräften innerhalb der Zone (ZP) manipuliert werden können,
diese Etiketten sind ferner geeignet, um durch Erfassungs- und Lesemittel (DL), beim Eintritt dieser Objekte in die Zone (ZP) und beim ihrem Austritt, gelesen zu werden, und so, dass die Identifizierungen, die von diesen Etiketten (E) bei den Eintritten und Austritten der Objekte gelesen werden, automatisch verarbeitet werden, um ein mögliches Vergessen eines Objekts (O) in der Schutzzone zu erfassen und gegebenenfalls einen Alarm auszulösen, wenn ein eingetretenes Objekt nicht wieder ausgetreten ist.

2. Verfahren nach Anspruch 1, wobei die in der Schutzzone (ZP) autorisierten Arbeitskräfte mit Identifikationskarten ausgerüstet sind, die geeignet sind, durch die Erfassungs- und Lesemittel gelesen zu werden.

3. Verfahren nach Anspruch 2, wobei bei der Erfassung des Austritts einer Arbeitskraft eine Gegenüberstellung mit der Liste der Identifizierungen der Etiketten der Objekte durchgeführt wird, die gleichzeitig mit der Erfassung der Arbeitskraft bei ihrem Eintritt in die Schutzzone (ZP) als eintretende Objekte erfasst werden.

4. System zum Schutz vor Schäden, die von Fremdkörpern, FODs, in einem Montage- oder Wartungsbereich der Luftfahrt verursacht werden, das beinhaltet:
- eine Abgrenzung, die geeignet ist, eine Schutzzone (ZP) um ein Luftfahrzeug oder einen Teil davon, an dem gearbeitet wird, zu definieren,
- eine Vielzahl von Identifikationsetiketten (E), die geeignet sind, um physisch mit Objekten assoziiert zu werden, die von den Arbeitskräften innerhalb der Schutzzone manipuliert werden können,
- Erfassungs- und Lesemittel (DL), die in der Lage sind, die Identifikationsetiketten (E) beim Eintritt dieser Objekte in die Schutzzone zu lesen und bei deren Austritt,
und
- Mittel, die zur automatischen Verarbeitung der Identifizierungen, die von diesen Etiketten beim Eintritt und Austritt der Objekte gelesen werden, geeignet sind, um ein mögliches Vergessen eines Objekts in der Schutzzone zu erfassen und gegebenenfalls einen Alarm auszulösen, wenn ein eingetretenes Objekt nicht wieder ausgetreten ist.

5. System nach Anspruch 4, Identifikationskarten der Arbeitskräfte beinhaltend, die geeignet sind, durch die Erfassungs- und Lesemittel gelesen zu werden.

6. System nach Anspruch 5, wobei die Verarbeitungsmittel dazu geeignet sind, bei der Erfassung des Austritts einer Arbeitskraft eine Gegenüberstellung mit der Liste der Identifizierungen der Etiketten der Objekte durchzuführen, die gleichzeitig mit der Erfassung des Eintritts der Arbeitskraft in die Schutzzone (ZP) als eintretende Objekte erfasst werden.

7. System nach einem der Ansprüche 4 oder 5, wobei die Identifikationsetiketten (E), und gegebenenfalls die Karten, vom Typ Identifikation durch Funkfrequenzen, RFID, sind.

8. System nach Anspruch 7, wobei die Identifikationsetiketten (E) selbstklebend sind.

9. System nach Anspruch 4, wobei die Erfassungs- und Lesemittel der Identifizierung ein Etikettenlesegerät vom Typ Identifikation durch Funkfrequenzen, RFID, beinhalten, und/oder ein optisches Erfassungsmittel.

10. System nach Anspruch 9, wobei die Erfassungs- und Lesemittel der Identifizierungen von einem Träger des Systems, wie einem Portal oder einem Masten, getragen werden, der geeignet ist, um im Bereich eines Eintritts-/Austrittsdurchgangs der Schutzzone angeordnet zu werden.

## Claims

1. Method of protection against damage caused by foreign objects, FODs, in a mounting area or maintenance area,
such that a protection zone (ZP) is defined around an aircraft or part of it on which work is being carried out, and
outside the said zone, identification labels (E) are made available to the operators, adapted to be physically associated with objects (O) likely to be handled by the operators inside the zone (ZP),
said labels also being adapted to be read by detecting and reading means (DL) when these objects enter the zone (ZP) and when they leave it and such that the identifiers read on these labels (E) when objects enter and leave are automatically processed to detect whether an object (O) has been forgotten in the protection zone and, if necessary, to generate an alarm when an object that has entered is not removed.

2. Method according to claim 1, in which the operators authorized to work in the protection zone (ZP) are equipped with identification badges adapted to be read by the detecting and reading means.

3. Method according to claim 2, in which, when the exit of an operator is detected, a comparison is carried out on the list of identifiers of the labels of objects detected as incoming objects concomitantly with the detection of the operator when he entered the protection zone (ZP).

4. Protection system against damage caused by foreign objects, FODs in a mounting area or maintenance area, such that it comprises:
- a delimitation adapted to define a protection zone (ZP) around an aircraft or part of it on which work is being carried out,
- a plurality of identification labels (E) adapted to be physically associated with objects likely to be handled by workers inside the protection zone,
- detecing and reading means (DL) capable of reading the identification labels (E) when these objects enter and leave the protection zone,
and
means adapted to automatically process the identifiers read on these labels when objects are brought in and out, to detect whether an object has been forgotten in the protection zone and, if necessary, to generate an alarm if an object that has been brought in has not been removed.

5. A system as claimed in claim 4, comprising user identification badges adapted to be read by the detection and reading means.

6. System as claimed in claim 5, in which the processing means are adapted to implement, when the exit of an operator is detected, a comparison with the list of identifiers of object labels detected as incoming objects concomitantly with the detection of the entry of the operator into the protection zone (ZP).

7. System according to one of claims 4 or 5, in which the identification labels (E), and where appropriate the badges, are of the RFID type.

8. System according to claim 7, in which the identification labels (E) are self-adhesive.

9. A system as claimed in claim 4, in which the identifiers detecting and reading means comprise a label reader of the RFID type and/or an optical detecting means.

10. A system as claimed in claim 9, in which the identifiers detecting and reading means are carried by a system support, such as a gantry or a mast, adapted to be located at an entry/exit passageway of the protection zone.
